Europäisches Patentamt

European Patent Office

Office européen des brevets

(19)

(11) **EP 1 181 826 B1**

(12) **FASCICULE DE BREVET EUROPEEN**

(45) Date de publication et mention
de la délivrance du brevet:
**14.04.2004   Bulletin 2004/16**

(21) Numéro de dépôt: **00931338.8**

(22) Date de dépôt: **22.05.2000**

(51) Int Cl.$^7$: **H04N 7/26**

(86) Numéro de dépôt international:
**PCT/FR2000/001402**

(87) Numéro de publication internationale:
**WO 2000/074387 (07.12.2000 Gazette 2000/49)**

(54) **CODAGE D'IMAGES HIERARCHIQUES A TRANSFORMATION VARIABLE**

HIERARCHISCHE BILDKODIERUNG MIT VARIABLER TRANSFORMATION

VARIABLE TRANSFORMATION HIERARCHICAL IMAGE CODING

(84) Etats contractants désignés:
**DE ES FR GB IT SE**

(30) Priorité: **26.05.1999   FR 9906815**

(43) Date de publication de la demande:
**27.02.2002   Bulletin 2002/09**

(73) Titulaires:
• **FRANCE TELECOM**
**75015 Paris (FR)**
• **TELEDIFFUSION DE FRANCE**
**75732 Paris Cedex 15 (FR)**

(72) Inventeurs:
• **LECHAT, Patrick**
**F-35000 Rennes (FR)**
• **LAURENT-CHATENET, Nathalie**
**F-35700 Rennes (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
• **WANG Y ET AL: "USE OF TWO-DIMENSIONAL DEFORMABLE MESH STRUCTURES FOR VIDEO CODING.PART II--THE ANALYSIS PROBLEM AND A REGION-BASED CODER EMPLOYING AN ACTIVE MESH REPRESENTATION" IEEE TRANSACTIONS ON CIRCUITS AND SYSTEMS FOR VIDEO TECHNOLOGY,US,IEEE INC. NEW YORK, vol. 6, no. 6, 1 décembre 1996 (1996-12-01), pages 647-659, XP000641037 ISSN: 1051-8215**

**Description**

Le domaine de l'invention est celui du codage d'images fixes ou animées. Plus précisément, l'invention concerne les techniques de compression d'images, ou de séquences d'images, basées sur la mise en oeuvre de transformations mathématiques réversibles.

De très nombreuses techniques de compression d'images sont connues, pour réduire la quantité de données nécessaires pour représenter une image ou une séquence d'images animées. On cherche ainsi, notamment, à réduire les débits des signaux numériques, en vue de leur transmission et/ou de leur stockage sur un support de données.

L'invention s'applique notamment, mais non exclusivement, à la transmission de signaux d'images à faible débit, ainsi qu'aux transmissions sans garantie de débit, telles que celles réalisées selon le protocole IP (« Internet Protocol »).

Parmi les nombreux procédés de codage d'images connus, on peut notamment distinguer les techniques ISO-JPEG et ISO-MPEG, qui ont donné lieu à une norme. Ces procédés de codage reposent notamment sur la mise en oeuvre de transformées, qui permettent une élimination efficace de la redondance dans une image.

Les principales transformations utilisées en compression d'images sont :

- la transformation de Karhunen Loève (KLT),
- la transformation de Fourier discrète (DFT),
- la transformation en cosinus discrète (DCT),
- et la transformation de Walsh-Hadamard (WHT).

Pour pallier ces différents inconvénients, une autre approche a été proposée, dans le document de brevet FR-A-278421 au nom des mêmes titulaires que la présente demande de brevet, et ayant pour titre « procédé de codage d'images fixes ou animées avec réduction et adaptation du débit ».

Cette technique a pour objet un procédé de codage d'une image numérique, visant à produire un train binaire représentatif de cette image, la longueur du train binaire étant fonction de représentation voulue. Ce procédé comprend les étapes suivantes :

- définir, sur un domaine de l'image à coder, un maillage hiérarchique comportant une pluralité de maillages emboîtés dont les sommets de mailles peuvent être des pixels de ladite image ;
- réaliser les optimisations de luminance, chrominance, et positions sur chaque niveau de maillage ;
- déterminer, pour chaque maille dudit maillage hiérarchique, un écart de luminance entre l'image à coder et une image interpolée obtenue à partir des sommets du maillage emboîté auquel appartient la maille considérée, et
- introduire dans le train binaire les valeurs (avantageusement codées en différentiel par rapport au niveau hiérarchique précédent) de positions, de luminance et de chrominance des sommets des mailles dont l'écart de luminance est supérieur à un écart seuil.

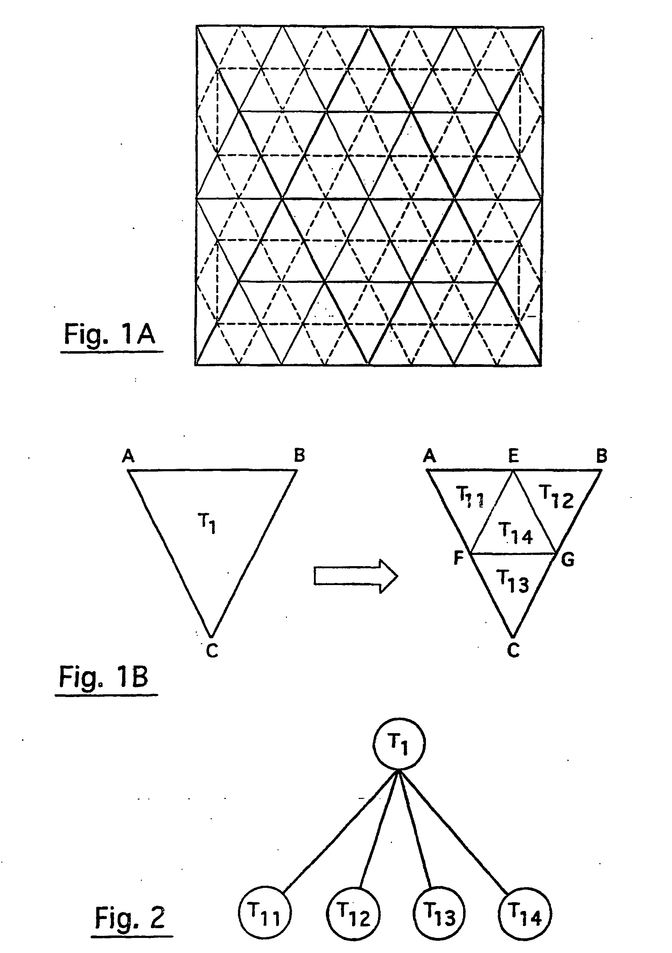

On notera que cette technique n'est pas limitée aux signaux de luminance et de chrominance, mais peut s'appliquer à tout modèle de couleurs. Selon cette technique, et ainsi que cela est illustré par la figure 1, on construit au terme de l'étape de maillage, une structure en arbre quaternaire 11, associée au maillage hiérarchique 12, pour manipuler les valeurs (couleurs et positions) des sommets des mailles. L'arbre présente un nombre de noeuds égal au nombre de triangles dans le niveau de maillage correspondant. Chaque noeud 13 de l'arbre se rapporte à un unique triangle 14 du maillage hiérarchique 12.

Une fois cet arbre 11 construit, on sélectionne les données de l'arbre a introduire dans le train binaire représentatif de l'image qui sera transmise et/ou stockée. Cette sélection dépend de la qualité voulue.

Pour réaliser cette sélection, on calcule, pour chaque triangle, un écart de luminance entre l'image à coder et l'image interpolée à partir des sommets du maillage emboîté auquel appartient la maille considérée. Cet écart est ensuite comparé à un écart seuil pour chaque triangle. La valeur de l'écart seuil est fonction de la qualité de représentation voulue.

On introduit ensuite dans le train binaire la partie de l'arbre se rapportant aux triangles dont l'écart de luminance est supérieur à l'écart seuil. Cette sélection des noeuds de l'arbre par parcours en profondeur est illustrée par la figure 2. Seuls sont conservés les noeuds se trouvant au-dessus de la frontière 21.

L'écart seuil permet donc de transmettre les données relatives à l'image fonction de la qualité locale de ces différentes partitions triangulaires. En effet, sur une partie texturée, la transmission des données intervient jusqu'au dernier niveau de maillage (maillage le plus fin) et, pour les parties plus lisses, un niveau grossier s'avère suffisant.

Cette technique est également décrite par WANG et al, dans le document "USE OF TWO-DIMENSIONAL DEFORMABLE MESH STRUCTURES FOR VIDEO CODING" (XP000641037). Ce document propose en effet, un procédé de génération d'un maillage hiérarchique quadrangulaire. Un seuil d'erreur permet de décider s'il est ou non

# EP 1 181 826 B1

nécessaire de poursuivre la division hiérarchique pour une maille donnée.

Pour obtenir une qualité suffisante, lorsqu'une portion de l'image est très texturée, il est nécessaire de prévoir un nombre de niveaux importants. Dans ce cas, le rendement du codage hiérarchique est faible. En d'autres termes, le codage hiérarchique est bien adapté aux images relativement simples, mais non aux images présentant des parties fortement texturées.

Dans la pratique, il n'est pas rare qu'au moins une partie de l'image soit fortement texturée. Cet aspect limite bien sur l'intérêt pratique du codage hiérarchique tel que décrit précédemment.

L'invention a notamment pour objectif de pallier ces différents inconvénients de l'état de l'art.

Plus précisément, un objectif de l'invention est de fournir un procédé de codage d'images exploitant les avantages de la technique appelée ici codage hiérarchique, sans en présenter les inconvénients.

Notamment, un objectif de l'invention est de fournir un tel procédé de codage, qui soit efficace même lorsque l'image à traiter présente des portions fortement texturées.

Un autre objectif de l'invention est, bien sûr que les modifications apportées à la technique du codage hiérarchique telle que décrite ci-dessus n'en modifie pas l'efficacité, lorsque l'image, ou la portion d'image à traiter est peu texturée.

L'invention a éralement pour objectif de fournir un tel procédé de codage, qui soit simple à mettre en oeuvre, et notamment sans nécessité d'intervention manuelle (par exemple pour sélectionner des zones texturées).

Plus généralement, un objectif de l'invention est de fournir un procédé de codage d'images présentant un bon rapport quantité de données à transmettre et/ou à stocker/qualité de reconstruction de l'image.

Un autre objectif de l'invention est de fournir un procédé de décodage correspondant, qui permette la reconstruction d'images de façon simple et peu coûteuse (en temps de traitement, capacité de stockage,...).

L'invention a également pour objectif de fournir un tel procédé de décodage, présentant de bonnes qualités de "scalabilité", ou "échelonnabilité" (c'est-à-dire permettant qu'une image grossière puisse être rapidement reconstruite, puis progressivement raffinée, jusqu'au niveau de raffinement souhaité).

Ces objectifs, ainsi que d'autres qui apparaîtront plus clairement par la suite, sont atteints selon l'invention à l'aide d'un procédé de codage d'une image à coder, comprenant les étapes suivantes :

- définition d'un maillage hiérarchique présentant au moins deux niveaux de maillage emboîtés formés de mailles définies par des sommets (qui peuvent être des pixels de ladite image à coder) ;
- détermination, pour chacune desdites mailles, d'une information d'erreur entre ladite image à coder et une image interpolée obtenue à partir des sommets des mailles appartenant au niveau de maillage de la maille considérée ;
- arrêt du raffinement des mailles présentant une information d'erreur inférieure à un premier seuil prédéterminé ;
- mise en oeuvre d'un codage spécifique pour les mailles présentant une information d'erreur supérieure à un second seuil prédéterminé;
- continuation du raffinement des mailles présentant une information d'erreur supérieure audit premier seuil prédéterminé et inférieure audit second seuil prédéterminé .

Ainsi, selon l'invention, on utilise sélectivement deux modes de codage distincts. Le codage hiérarchique, ou à maillages emboîtés, est le codage principal, ou codage de base, mais il n'est pas utilisé systématiquement : pour les portions d'image qui le nécessite, un autre codage plus efficace est utilisé.

La décision d'utiliser ce codage spécifique est prise par comparaison à un seuil. Plus précisément, à chaque noeud considéré du maillage, trois possibilités sont offertes : arrêter le raffinement, ou la division, des mailles (la qualité atteinte pour la portion d'image correspondante étant suffisante), passer au niveau hiérarchique suivan, en conservant le même codage hiérarchique, ou utiliser un autre codage (en particulier un codage mieux adapté aux portions très texturées).

On notera qu'il est envisageable d'utiliser plusieurs types différents de codages spécifiques (ou un même codage avec des paramètres différents), pour adapter plus précisément encore le choix du codage aux caractéristiques de la portion d'image.

Selon un mode de réalisation préférentiel de l'invention, ledit codage spécifique met en oeuvre au moins une transformation réversible (par exemple une DCT). Cette technique s'avère en effet bien adaptée au codage des portions texturées.

De façon avantageuse, lesdites mailles sont des triangles (obtenus par un partitionnement régulier ou adapté au contenu de l'image). On notera que l'utilisation d'une transformation telle qu'une DCT sur des triangles est nouvelle en soi.

Ainsi, ledit codage spécifique peut avantageusement comprendre les étapes suivantes :

- association à chacun desdits triangles à coder d'une matrice carrée représentative dudit triangle à coder, à l'aide d'une première transformation réversible ;
- application d'une seconde transformation réversible de décorrélation sur chacune desdites matrices carrées, dé-

3

livrant des matrices transformées.

De façon préférentielle, ladite étape d'association d'une matrice carrée comprend les étapes suivantes :

- transformation affine d'un triangle source en un triangle rectangle isocèle, appelé triangle de référence ;
- création d'une matrice carrée dont la partie inférieure comprend les données représentatives dudit triangle rectangle isocèle ;
- symétrisation de ladite matrice carrée.

Ladite seconde transformation peut notamment appartenir au groupe comprenant :

- la transformation de Karhunen Loève (KLT) ;
- la transformation de Fourier discrète (DFT) ;
- la transformation en cosinus discrète (DCT) ;
- la transformation de Walsh-Hadamard (WHT).

Avantageusement, ledit codage spécifique comprend une étape de quantification et de codage des données de la partie inférieure de ladite matrice transformée. De même. le codage principal mettant en oeuvre le maillage hiérarchique met en oeuvre une quantification et un codage adaptés.
Selon un mode de réalisation préférentiel, au moins un des paramètres suivants est modifiable :

- ledit premier seuil ;
- ledit second seuil ;
- la structure dudit maillage emboîté ;
- un facteur d'échelle $\alpha$ permettant une expansion ou une compression de ladite matrice carrée dans le domaine spatial ;
- le type de quantification ;
- le pas de quantification.

De façon avantageuse, ladite information d'erreur correspond à un écart de luminance, représentant une erreur quadratique ou une erreur absolue entre un triangle source et le triangle approximé correspondant.
Pour chaque maille, on effectue donc avantageusement le choix suivant :

- si ladite information d'erreur est inférieure audit premier seuil, on interrompt la division hiérarchique pour la maille considérée ;
- si ladite information d'erreur est supérieure audit premier seuil, mais inférieur audit second seuil, on continue à appliquer ladite division hiérarchique ;
- si ledit écart de luminance est supérieur audit second seuil, on met en oeuvre ledit codage spécifique.

L'adaptation à une autre composante de signal que la chrominance est directe.
De façon préférentielle, pour tous les niveaux de maillage autres que le premier niveau, les données prises en compte pour le codage sont des valeurs différentielles quantifiées correspondant chacune à la différence quantifiée entre une valeur optimisée pour le niveau hiérarchique considéré de l'image à coder et une valeur interpolée à partir du maillage du niveau hiérarchique inférieur.
Cela permet de réduire fortement la quantité d'informations à coder.
Avantageusement, le procédé de l'invention comprend une étape préalable d'optimisation de la position des sommets de chacun desdits maillages, minimisant un critère d'erreur prédéterminé.
En d'autres termes, la partition est adaptée au contenu de l'image.
De façon préférentielle, le procédé comprend une étape de définition d'un arbre quaternaire de subdivision, permettant d'identifier les mailles utilisant ledit codage spécifique et les mailles dont le contenu est interpolé obtenue à partir des valeurs aux noeuds définissant lesdites mailles.
De façon avantageuse, on prévoit également une étape d'adaptation dudit maillage avec contenu de l'image, mettant en oeuvre des inversions des diagonales des quadrilatères composés par tous les couples de triangles adjacents.
L'invention concerne également le procédé de décodage des données codées selon le procédé de codage décrit ci-dessus. Un tel procédé de décodage comprend notamment les étapes suivantes :

- décodage préalable desdites données codées selon ledit codage mettant en oeuvre maillage hiérarchique, permettant la description d'une représentation initiale ;

- décodage complémentaire desdites données codées à l'aide dudit codage spécifique, permettant d'affiner ladite représentation initiale.

Ainsi, l'image peut être reconstruite progressivement, au fur et à mesure de la réception et du décodage, de façon de plus en plus affinée (tout d'abord à partir des niveaux hiérarchiques successifs, puis des données complémentaires du codage spécifique). Il est donc possible d'adapter la qualité de la reconstruction de l'image aux moyens disponibles (débit de transmission et capacité de traitement du terminal), voire de définir plusieurs niveaux de qualités de décodage (une version simplifiée pouvant ne pas disposer du décodage complémentaire).

Lorsque ledit codage spécifique met en oeuvre une DCT appliquée sur des triangles, tel que décrit ci-dessus, ledit décodage complémentaire comprend avantageusement les étapes suivantes de reconstruction :

- application d'une transformation inverse à ladite seconde transformation réversible de décorrélation sur lesdites matrices transformées, délivrant lesdites matrices carrées reconstruites ;
- association à chacune desdites matrices carrées reconstruites d'un triangle reconstruit correspondant, à l'aide d'une transformation affine inverse de ladite première transformation réversible ;
- reconstruction de ladite partition minimale, à partir desdits triangles reconstruits.

Avantageusement, lesdites matrices carrées sont recréées à partir des données d'un train binaire reçu, dont les données décodées sont les coefficients du triangle à reconstruire, qui forment la partie inférieure de ladite matrice. Préférentiellement, ledit décodage préalable assure la lecture, dans le train binaire reçu, d'au moins une des informations appartenant au groupe comprenant :

- le nombre de niveaux de la hiérarchie ;

  - l'identification de la technique de codage utilisée pour chacun des triangles ;
  - la succession des valeurs différentielles des composantes associées aux noeuds dudit maillage hiérarchique ;
  - l'identification des arcs sur lesquels une inversion de diagonale est réalisée.

D'autres caractéristiques et avantages de l'invention apparaîtront plus clairement à la lecture de la description suivante d'un mode de réalisation préférentiel, donné à titre de simple illustratif et non limitatif, et des dessins annexés, parmi lesquels:

- les figures 1 et 2 illustrent le principe général du procédé de codage faisant l'objet de la demande de brevet FR-A-2784211 discutée en préambule, et concerne plus précisément :

  - figure 1 : correspondance entre un maillage emboîté et un arbre quaternaire ;
  - figure 2 : un exemple des sélections des noeuds de l'arbre de la figure 1 ;

- la figure 3 est un organigramme présentant le principe général du procédé de l'invention ;
- la figure 4, commentée en annexe 1, illustre la détermination des valeurs différentielles à introduire dans le train binaire, après quantification, qui sera transmis ou stocké, lorsque l'on met en oeuvre le codage hiérarchique ;
- la figure 5, commentée en annexe 2, illustre une opération d'optimisation de la positions des sommets d'un niveau de maillage, et sa propagation au niveau de maillage supérieur ;
- les figures 6A et 6B, commentées en annexe 3, montrent respectivement un cas où l'inversion de diagonale est exclus, et un cas où elle est possible ;
- la figure 7 est un organigramme simplifié d'un mode de mise en oeuvre du codage spécifique selon l'invention, reposant sur la mise en oeuvre d'une DCT ;
- la figure 8 illustre le principe des deuxième et troisième étapes du procédé de la figure 7 ;
- la figure 9 est un extrait, plus précis, de la figure 8 ;
- les figures 10 et 11 présentent deux modes de quantification pouvant être utilisés dans le procédé de la figure 7;
- la figure 12 illustre le parcours en zig-zag de l'étape de codage du procédé de la figure 7 ;
- la figure 13 est un organigramme simplifié illustrant le choix du traitement à effectuer, lorsque l'on met en oeuvre de façon associée le procédé de l'invention et un codage hiérarchique.

## 1.    principes de base de l'invention

L'invention concerne donc une amélioration de la technique des maillages emboîtés (ou codage hiérarchique), telle que décrite en préambule. Selon la présente invention, on prévoit en effet d'utiliser un second type de codage, pour les parties de l'image pour lesquelles cette technique des maillages emboîtés s'avère peu efficace.

Comme cela est expliqué précédemment, on définit tout d'abord, selon cette technique des maillages emboîtés, un maillage hiérarchique sur le domaine de l'image à coder, comportant une pluralité de maillages emboîtés. Les sommets de ces maillages peuvent être des pixels de l'image à coder. Ce maillage est par exemple obtenu par divisions régulières et successives des mailles du maillage grossier. Avantageusement, la position des noeuds définissant les mailles est adaptée en fonction du contenu de l'image.

Selon la technique des maillages emboîtés, on se place à un niveau n (compris entre le premier et le dernier niveau de maillage) de maillage, on calcule l'image interpolée par la technique du maillage hiérarchique, et on en déduit une image d'erreur correspondant à la différence de luminance entre l'image originale et l'image interpolée.

On construit ensuite l'arbre relatif aux n premiers niveaux de maillages, et on calcule l'écart de luminance pour chacun des triangles du maillage de l'image d'erreur, et on choisit un écart seuil S. Le critère de l'écart de luminance sur un triangle T correspond à l'erreur quadratique suivante :

$$E_T = \sum_{x,y \in T} (I^{interp}(x,y) - I^{orig}(x,y))^2 = \sum_{x,y \in T} I^2(x,y)$$

Avec I, l'image d'erreur entre l'image interpolée et l'image originale sur le triangle T.

Selon la présente invention, on détermine alors pour chaque noeud si la procédure d'approximation doit s'arrêter, si l'on doit continuer la subdivision du maillage par interpolation affine avec la technique du maillage hiérarchique, ou si l'on doit utiliser une autre technique de codage, qui est avantageusement une technique à base de transformation réversible, telle que décrite par la suite.

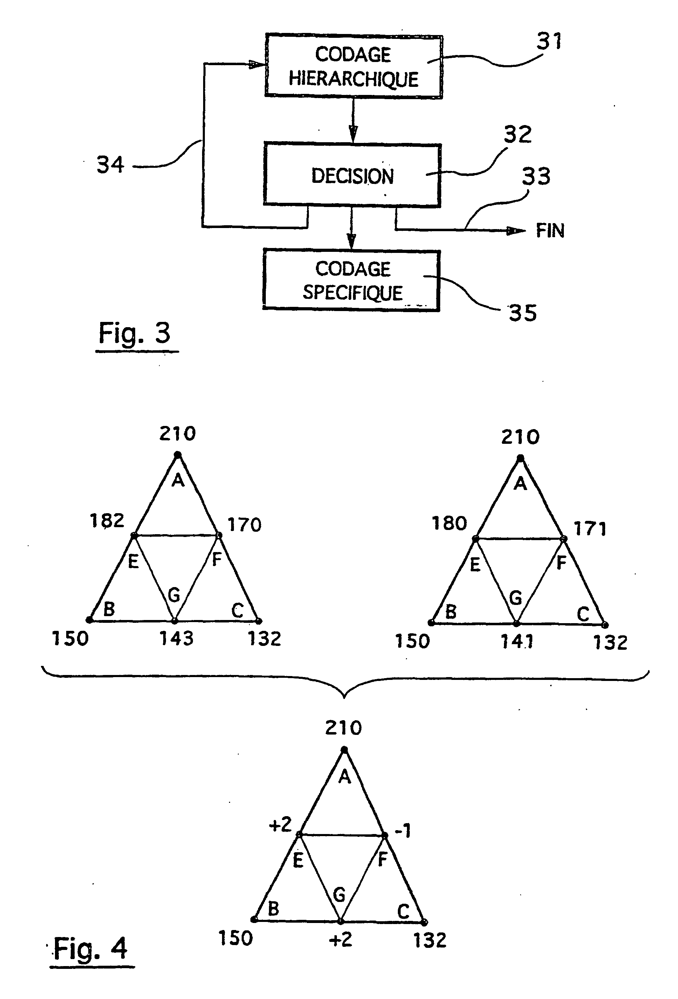

La figure 3 illustre le fonctionnement général de l'invention. On débute par le codage hiérarchique 31, au premier niveau de la hiérarchie. Un exemple particulier de mise en oeuvre est détaillé ci-dessous (§ 2).

Pour chaque triangle considéré, une décision 32 est prise pour la suite de la procédure :

- interruption 33 du codage ;
- passage 34 au niveau hiérarchique suivant ;
- mise en oeuvre d'un autre type de codage 35.

Le paragraphe 3 présente un mode de mise en oeuvre d'un codage 35 utilisant une transformation DCT appliquée à des triangles. Le paragraphe 4 détaille un exemple de mécanisme de décision 32.

## 2. rappels sur la technique des "maillages emboîtés"

On précise ci-dessous certains aspects avantageux de mise en oeuvre de l'étape 32. Les principes généraux de cette technique ont déjà été décrits en préambule, en relation avec les figures 1 et 2.

### 2.1 écart seuil variable

On prévoit avantageusement que l'écart seuil diminue au cours du procédé pour permettre une échelonnabilité du codage.

Ainsi, à chaque niveau hiérarchique, l'étape de seuillage est donc réitérée plusieurs fois avec des écarts seuils de plus en plus faibles de manière à générer à chaque itération un groupe de bits supplémentaire venant améliorer la qualité de représentation.

Pour construire un train binaire final sans redondance, on prévoit l'utilisation d'une table de référence dans laquelle à chaque noeud de l'arbre est associée une valeur 0 ou 1 indiquant si les valeurs du noeud en question ont déjà été introduites dans le train de bits. Les valeurs de la table sont mises à jour à mesure que les valeurs des noeuds sont introduites dans le train de bits. Ainsi, lorsque l'écart seuil diminue, on vérifie que les valeurs de noeud que l'on cherche à introduire dans le train de bits ne l'ont pas déjà été. Cela permet de n'introduire dans le train de bits que la partie de l'arbre supplémentaire correspondant à l'abaissement de l'écart seuil.

On peut ainsi décider de n'exploiter que la première partie du train binaire obtenu avec l'écart seuil le plus élevé lorsque l'on a pas besoin d'une qualité de représentation élevée. Pour obtenir une qualité de représentation supérieure, il faudra exploiter une plus grande partie du train binaire.

## 2.2 quantification et compression

On prévoit également avantageusement de quantifier et de compresser les valeurs des sommets avant de les introduire dans le train binaire afin de limiter la taille de ce dernier. La quantification est choisie de préférence non uniforme. Elle peut par exemple s'appuyer sur la répartition statistique des valeurs de luminance (resp. de chrominance et de position).

Au terme de l'étape de quantification, les valeurs différentielles quantifiées sont soumises à une opération de compression de données visant à limiter la longueur du train binaire. Avantageusement, la compression est effectuée par un codeur arithmétique adaptatif, qui présente de bons taux de compression dans le cas présent.

Les distributions statistiques des valeurs de luminance, de chrominance et de position étant différentes les unes des autres, il est préférable de coder séparément ces valeurs. Aussi, le codeur arithmétique adaptatif est prévu pour traiter séparément ces trois types de valeur.

## 2.3 codage différentiel

Afin de réduire la taille du train binaire, on prévoit selon un perfectionnement de ne pas introduire dans le train binaire les valeurs exactes de luminance, de chrominance et de position des sommets de mailles des maillages emboîtés mais des valeurs différentielles, hormis pour le maillage de base. Chaque valeur différentielle représente la différence entre la valeur optimisée du niveau hiérarchique considérée de l'image à coder et une valeur interpolée obtenue à partir des valeurs exactes correspondant aux sommets voisins du maillage emboîté de niveau hiérarchique inférieur.

Un exemple de détermination de valeurs différentielles est discuté en annexe 1.

## 2.4 maillage adapté au contenu de l'image

La structure de maillage choisie précédemment est par construction régulière. Elle peut donc parfois sembler inadaptée pour représenter une image comportant des disparités au niveau de son contenu et mêlant notamment des régions uniformes à des zones plus texturées nécessitant une plus forte densité de sommets. Une optimisation de la position des sommets du maillage va permettre de déplacer les concentrations de sommets du maillage vers les zones le nécessitant.

Selon une forme de réalisation préférée, on prévoit également d'adapter le maillage (position et valeurs Y, U, V des sommets) au contenu de l'image afin d'en exploiter au mieux le potentiel de codage. Cette adaptation peut se faire à trois niveaux :

- optimisation de la position des sommets du maillage : la position des noeuds est modifiée en fonction de leur efficacité à représenter localement l'image ;
- optimisation des valeurs de luminance et de chrominance des sommets du maillage : les valeurs Y, U, V sont optimisées pour représenter au mieux l'image originale ;
- optimisation de la topologie du maillage : la topologie du maillage est modifiée au moyen d'une opération d'inversion de diagonale de manière à encore améliorer la capacité du maillage à représenter localement l'image.

L'effet visuel le plus immédiat d'une telle optimisation se manifeste par un rapprochement des sommets du maillage vers les contours physiques des objets de l'image. Une telle technique est par exemple présentée dans le document de brevet FR-98 12 525, au nom des titulaires de la présente demande de brevet.

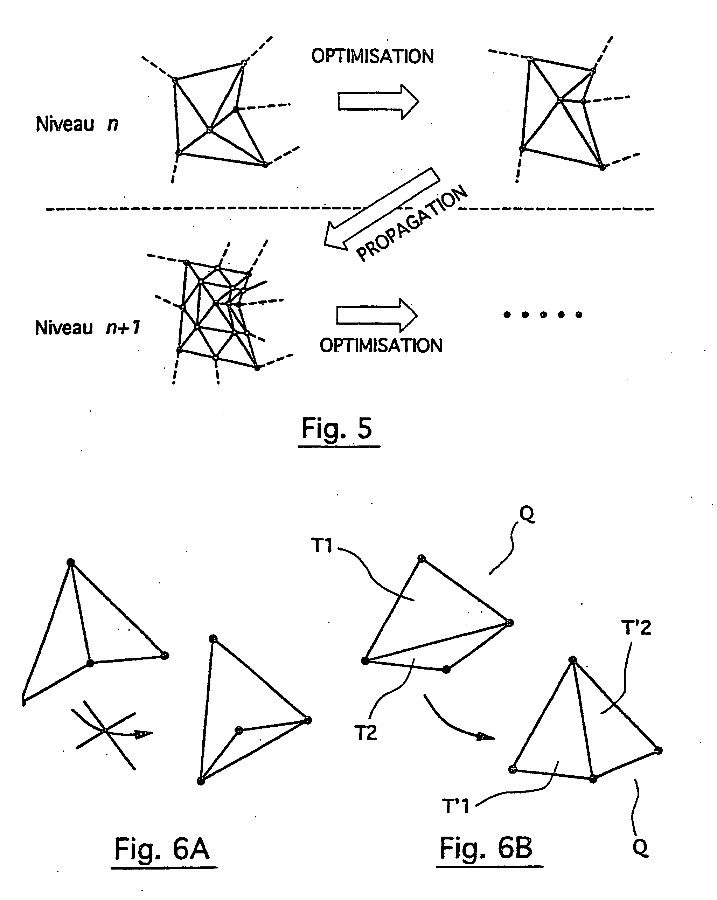

Cette opération est effectuée niveau par niveau, en commençant par le niveau correspondant au maillage de base (niveau 0). Le résultat de l'optimisation au niveau n est ensuite transmis au niveau n+1, et la position des sommets supplémentaires du niveau n+1 est obtenue à partir de la nouvelle position des sommets de niveau n. Cette optimisation de la position à chaque niveau et sa propagation aux différents niveaux de l'arbre sont illustrées à la figure 5, et discutées en annexe 2.

## 2.5 inversion de diagonale

Selon un dernier perfectionnement, on peut également prévoir d'améliorer la topologie du maillage. Il arrive en effet que la structure locale du maillage ne soit pas adaptée aux particularités de l'image. Bien qu'il serait possible d'affiner le maillage jusqu'à obtenir un maillage hiérarchique adapté, il se révèle parfois plus simple d'effectuer une opération d'inversion de diagonale.

Cette opération d'inversion de diagonale est effectuée sur le dernier niveau de maillage et consiste à inverser la diagonale dans les quadrilatères convexes formés de deux triangles adjacents dudit niveau de maillage si le maillage ainsi modifié offre une meilleure qualité de reconstruction de l'image.

Cette opération d'inversion de diagonale est présentée en annexe 3, en relation avec les figures 6A et 6B.

### 2.6.1 *problème des zones fortement structurées*

Malgré ces différents perfectionnements, on constate que cette technique est insuffisamment efficace pour traiter certaines portions d'image, en particulier lorsque ces dernières sont très texturées.

### 3. codage par DCT adapté à une partition triangulaire

L'invention propose donc la mise en oeuvre d'une transformation, par exemple une transformation DCT, adaptée à une partition triangulaire, pour les portions d'image le nécessitant. Le choix de ces portions est discuté au paragraphe 4.

### 3.1 *principe*

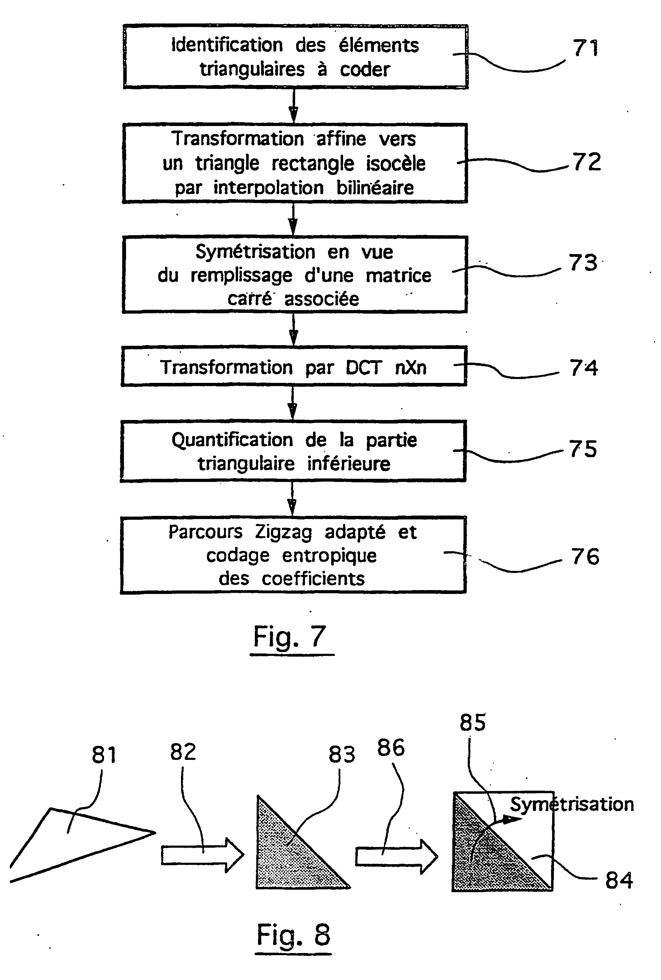

La figure 7 est un organigramme général illustrant le procédé correspondant.
Le traitement avec noeud selon l'invention est donc le suivant :

- définition 71, sur le domaine de l'image à coder, d'une partition triangulaire, qui peut être adaptée au contenu, sur le domaine de la portion d'image à coder ;
- détermination, pour chaque élément de la partition obtenue, des transformations permettant d'associer à chaque élément triangulaire un triangle de référence (72), puis un carré (c'est-à-dire une matrice) (73) ;
- réalisation d'une DCT 74 sur chacune de ces matrices ;
- application d'un procédé de quantification 75 et de codage 76, pouvant être identique à ceux des standards actuels.

Le partitionnement 71 peut bien sûr être adapté au contenu de l'image, par exemple en mettant en oeuvre les opérations décrites au paragraphe 2.4.

### 3.2 *transformations réversibles*

#### 3.2.1 *transformation affine en un triangle isocèle*

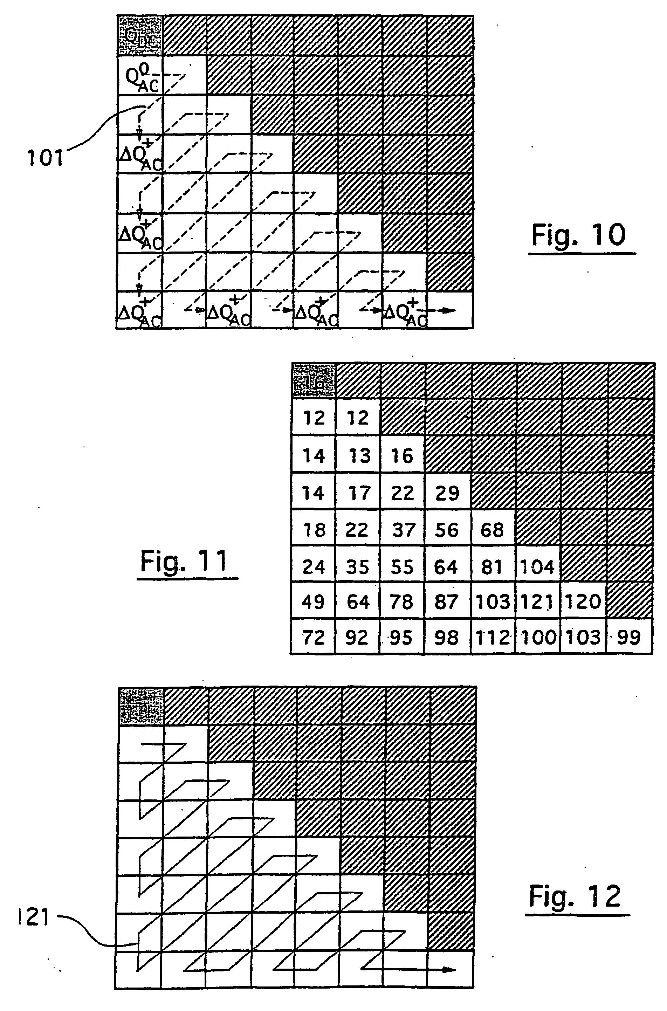

Les deuxième et troisième étapes 72 et 73 du procédé de l'invention est illustrée par la figure 8.
On détermine, pour chaque élément triangulaire 81 de la partition, la transformation affine 82 permettant d'associer à chaque triangle quelconque 81 un triangle de référence 83, qui soit isocèle. On transforme ensuite le triangle de référence en un carré, et plus précisément une matrice carrée 84, par symétrisation 85.
Plus précisément, la première transformation 82 consiste à déterminer la transformation affine permettant de passer qu'un triangle quelconque 81 au triangle de référence 83, ainsi que cela est illustré par la figure 9.
La transformation affine inversible F telle que $P_i = F(Q_i)$, avec $P_i = (x_i, y_i)$ et $Q_i = (X_i, Y_i)$, s'écrit:

$$\begin{cases} x = x_1 + (x_3 - x_1)X + (x_2 - x_1)Y \\ y = y_1 + (y_3 - y_1)X + (y_2 - y_1)Y \end{cases}$$

Cette transformation affine est inversible, car le déterminant de la matrice est égal (au signe près) à 2A (où A représente l'aire du triangle quelconque 81), qui est supposé non nul. Cette transformation affine inverse s'écrit donc :

$$\begin{cases} X = \dfrac{(x_2 - x_1)(y_1 - y) + (y_1 - y_2)(x_1 - y)}{(x_3 - x_1)(y_2 - y_1) + (x_2 - x_1)(y_1 - y_3)} \\ Y = \dfrac{(y_3 - y_1)(x_1 - x) + (x_1 - x_3)(y_1 - y)}{(x_3 - x_1)(y_2 - y_1) + (x_2 - x_1)(y_1 - y_3)} \end{cases}$$

*3.2.2     DCT*

Si l'on note I(x,y) la luminance du pixel de coordonnées (x,y) et si l'on considère que l'image à coder a été partitionnée en blocs de taille M x N, l'application d'une transformation a(x, y, m, n) orientée bloc va produire une image F avec :

$$F(m,n) = \sum_{x=0}^{M-1}\sum_{y=0}^{N-1} I(x,y)a(x,y,m,n) \qquad (1)$$

car I(x,y) = I(x,y), du fait de la symétrisation 85.

A partir de la transformation a(x, y, m, n), une transformation inverse b(x, y, m, n) peut être définie afin de reconstruire l'image originale I :

$$I(x,y) = \sum_{x=0}^{M-1}\sum_{y=0}^{N-1} F(m,n)b(x,y,m,n) \qquad (2)$$

La DCT s'obtient en posant :

$$a(x,y,m,n) = \frac{2c(m)c(n)}{\sqrt{MN}}\cos(\frac{(2x+1)\pi m}{2M})\cos(\frac{(2y+1)\pi n}{2N} \qquad (3)$$

Avec :

$$c(w) = \begin{cases} \frac{1}{\sqrt{2}} & si \quad w = 0 \\ 1 & sinon \end{cases}$$

La deuxième transformation 73, 86 consiste à transposer les informations contenues dans chaque triangle d'aire A dans la partie inférieure d'une matrice carrée G de $E(\alpha \times \sqrt{2 \times A})$ lignes, où $E$ représente la partie entière supérieure de la valeur entre parenthèses. et $\alpha \in R^{+,*}$ représente un facteur d'échelle, qui agit sur la représentation visuelle de l'image, en réalisant une expansion ($\alpha$>1) ou une compression ($\alpha$<1) dans le domaine spatial.

D'après les formules (1) et (3), on a :

$$F(m,n) = F(n,m)$$

Après symétrisation de G. sa transformation 74 selon l'équation (1) engendre une matrice également symétrique H.

De ce fait, les informations contenues dans la partie inférieure de chaque matrice G étant identiques à la partie supérieure 75, l'utilisation de la transformation DCT 74 basée bloc peut être mise en oeuvre comme par exemple dans MPEG ou JPEG.

Après transformation 74, seules les parties inférieures des matrices H seront quantifiées 75 et codées 76.

*3.3      optimisation du codage*

Afin d'optimiser les performances du coût de codage 76, deux moyens d'action peuvent être mis en oeuvre, modulés par exemple en fonction de la pertinence de la texture sous-jacente aux triangles considérés, à savoir :

-    le facteur d'échelle $\alpha$ (on prendra alors $\alpha$<1) ;
-    le choix de la quantification, et en particulier amplitude des pas de quantification retenus.

*3.3.1 quantification*

Parmi les quantifications 75 possibles, on peut notamment utiliser :

- une quantification uniforme ;
- une quantification à parcours zig-zag ;
- une quantification par utilisation d'une matrice de pondération pré-évaluée sur critère psycho-visuel.

La quantification à parcours zig-zag consiste à initialiser le processus de quantification à une valeur $Q^0_{AC}$, qui au cours du parcours, à chaque remontée, est incrémentée d'une valeur $\Delta_{AC}$, ainsi que cela est illustré par la flèche 101 de la figure 10.

Un exemple de matrice de pondération pré-évaluée sur critère psycho-visuel est la matrice QM standard JPEG, illustré en figure 11, ou MPEG4. Les matrices G et QM pouvant être de taille différente, on procédera à une interpolation de la matrice QM, ramenant cette dernière à la taille de G comme pour JPEG, il est alors possible de définir un facteur de qualité qf agissant comme multiplicateur à la matrice QM.

*3.3.2 codage*

Le codage effectif 76 est par exemple réalisé en effectuant un codage de type RLE (Run Length Encode) et entropique, sur le parcours zig-zag 121 représenté en figure 12.

## 4. combinaison des deux techniques de codage

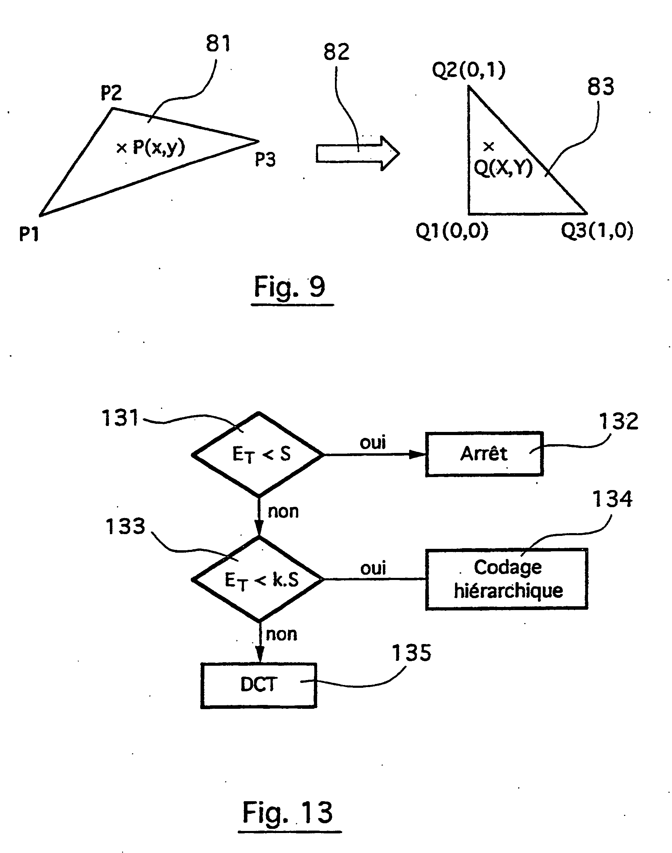

La mise en oeuvre selon l'invention des deux techniques de codage décrites ci-dessus peut reposer sur le procédé illustré en figure 13. Si, pour le niveau n donné, l'écart de luminance d'un triangle T du maillage est :

- 131 : inférieur à l'écart seuil : la partie de l'image interpolée sur ce triangle est d'une qualité visuelle correcte, et la procédure s'arrête (132) ;
- 133 : supérieur à l'écart seuil mais inférieur à k x S, avec k ≥ 1 : le procédé d'approximation continu avec la technique du maillage hiérarchique (134), la partie de l'image interpolée correspondant à une image moyennement texturée ;
- 135 : supérieur à k x S avec k ≥ 1 : le triangle est traité par une DCT appliquée au triangle de l'image d'erreur (136).

Cette sélection se justifie de la manière suivante. On sait que :

$$|F(m,n)| \leq \sum_{x=0}^{M-1}\sum_{y=0}^{N-1}|I(x,y)a(x,y,m,n)| \qquad d'après \quad (1)$$

d'où:

$$|F(m,n)| \leq 2 \times \sum_{x=0}^{M-1}\sum_{y=0}^{N-1}|I(x,y)|$$

donc :

$$\exists l \geq \frac{1}{Min_{x,y}|I(x,y)|}, \qquad |F(m,n)| \leq 2 \times l \times \sum_{x=0}^{M-1}\sum_{y=0}^{N-1}I^2(x,y)$$

On constate donc que le coefficient F(m, n) tend vers zéro lorsque l'écart de luminance tend vers zéro. Une faible erreur quadratique entraîne des coefficients AC après transformée de faible amplitude, ayant de fortes chances d'être annulés après quantification.

Ainsi, réaliser sur de telles mailles une interpolation affine moins coûteuse qu'une transformation DCT s'avère plus judicieux.

Le procédé global consiste donc à traiter une partie de l'image par la technique du maillage hiérarchique, et à traiter les parties très texturées de cette image par une DCT selon la présente invention, appliquée sur des triangles de l'image d'erreur correspondante.

On applique donc ici sur la partie texturée de l'image d'erreur une DCT sur les triangles dont l'écart de luminance est important.

Il convient de noter que la technique à base de transformation n'est qu'un exemple. L'invention peut utiliser de nombreuses autres techniques de codage complémentaires, telles que par exemple :

- les méthodes à base de décomposition fractale : le principe de compression d'images en niveaux de gris par la méthode des IFS, aussi appelée compression fractale, repose sur l'expression du contenu de l'image au moyen du contenu lui-même.

  Il peut être vu comme une auto-quantification de l'image. La formalisation de cette méthode provient notamment des travaux de Hutchinson en 1981, et de ceux de Bradley, Demko et d'autres chercheurs du Georgia Institute of Technology entre 1985 et 1988. Le premier algorithme automatique appliquant ces idées à la compression des images a été proposé par Jacquin en 1989.

  Des améliorations à cette technique sont proposées dans le document de brevet FR-A-2788655, intitulé "procédé et dispositif de codage à base de schémas IFS, à fonctions de collage oscillantes, procédé de codage, fonction de collage, support de données et applications correspondants".

- les méthodes dites de "matching pursuit" (encore appelées poursuites d'appariemments), notamment décrit dans l'article de Ralph Neff et Avideh Zakhor, intitulé "Very Low Bit Rate Video Coding based on Matching Pursuits", publié dans IEEE Transactions on circuits and systems for video technology.

  Le codage (du résidu) par matching pursuit est une méthode itérative qui utilise un dictionnaire de fonctions redondantes. A chaque itération, on cherche la fonction qui représente le mieux le résidu obtenu à l'étape précédente. On décompose ainsi l'image sur une suite d'atomes qui la représentent de manière optimale ;

- la SADCT ("Shape Adaptive DCT"), décrite par exemple par T. Sikora et B. Makai dans "Shape Adaptive DCT for generic Coding" (IEEE Transactions on Circuits and Systems for Video Technology, 5(1), pp. 59 - 62, février 1995).

On peut également prévoir que plusieurs de ces techniques soient disponibles, la sélection de l'une de ces techniques lors de l'étape de décision ayant lieu en fonction de critères pré-déterminés.

### 5.    décodage

L'invention concerne également le décodage des données codées selon le procédé de codage décrit précédemment. Ce procédé de décodage se déduit directement des étapes de codage.

Ainsi, le décodage repose sur la réception d'un train binaire contenant :

- la description d'une représentation initiale de l'image, issue du codage préalable (qui sera soumise à un décodage préalable symétrique) ;
- les valeurs quantifiées et codées après transformation DCT associées aux triangles sélectionnés.

Les coefficients de pondération des matrices peuvent être transmis dans le train binaire. Cependant, préférentiellement, ils sont connus du décodeur.

Le décodage des valeurs quantifiées et codées après transformation DCT comprend notamment les étapes suivantes :

- création d'une matrice carrée symétrique dont la partie inférieure comprend les coefficients décodés du triangle à représenter, lu dans le train binaire ;
- transformation DCT inverse de la matrice ainsi créée ;
- transformation affine du triangle rectangle isocèle associé à la partie inférieure de la matrice, vers le triangle à représenter.

Le décodage correspondant assure notamment la lecture, dans le train binaire reçu :

- du nombre de niveaux de la hiérarchie ;

- de l'identification de la technique de codage utilisée pour chacun des triangles ;
- de la succession des valeurs différentielles des composantes associées aux noeuds dudit maillage hiérarchique ;
- de l'identification des arcs sur lesquels une inversion de diagonale est réalisée.

ANNEXE 1

Un exemple de détermination de valeurs différentielles est illustré à la figure 4. On considère un triangle de niveau 0 dont les sommets A, B, C ont respectivement pour valeur de luminance 210, 150 et 132. Ce triangle est subdivisé en quatre triangles identiques de niveau 1, faisant apparaître ainsi trois nouveaux sommets E, F et G localisés respectivement au milieu des cotés AB, AC et BC du triangle de niveau 0. Les valeurs de luminance des sommets E, F et G dans l'image à coder sont respectivement 182, 170 et 143. Si on calcule les valeurs de luminance des sommets E, F, G par interpolation des valeurs des sommets adjacents, on obtient alors les valeurs 180, 171 et 141. Les valeurs introduites dans le train binaire sont alors +2, -1 et +2 correspondant à la différence entre les valeurs exactes et les valeurs interpolées. Ces valeurs sont cependant préalablement quantifiées pour limiter le nombre de valeurs possibles et améliorer ainsi les performances de l'opération de compression de données à suivre.

Par ailleurs, pour ne pas cumuler les erreurs de quantification, le calcul des valeurs différentielles est réalisé à partir des valeurs quantifiées du niveau inférieur.

ANNEXE 2

L'optimisation de position est effectuée par minimisation d'un critère E correspondant à l'écart de luminance entre l'image à coder et l'image interpolée. Pour le calcul de E, on considère des points q de $\mathfrak{R}^3$ de coordonnées x, y et z avec z=Y (composante de luminance). Le critère E est défini de la manière suivante

$$E = \int_{\mathfrak{R}^3} F(q)dq$$

où F est une fonction indicatrice valant 1 si q est compris entre la surface formée des points q de l'image originale et la surface formée des points q de l'image interpolée, et 0 sinon.

La minimisation de l'écart E est effectuée au moyen d'un algorithme de descente de gradient à pas adaptatif. Il s'agit en fait de trouver le vecteur X des points de $\mathfrak{R}^3$ où E est minimal c'est-à-dire :

$$\nabla E(X)=0$$

Cela revient à résoudre le système d'équations non linéaires suivant:

$$\begin{cases} \dfrac{\partial E}{\partial x}(X) = 0 \\ \dfrac{\partial E}{\partial y}(X) = 0 \\ \dfrac{\partial E}{\partial z}(X) = 0 \end{cases}$$

On peut résoudre ce système directement par la méthode de Newton, cependant il arrive que cette méthode ne converge pas lorsque le point de départ des itérations est trop éloigné de la solution. Aussi, est-il préférable d'utiliser des procédures itératives conduisant à produire une suite de positions intermédiaires $q_1$, $q_2$... convergeant vers un optimum local de E.

Ce type de procédure itérative se déroule de la manière suivante: pour la détermination de la position optimale du sommet $S_0$, on part de sa position de départ $q_{s_0}$, et on calcule le gradient de E en ce point. Comme $\nabla E(q_{s_0})$ indique la direction de la plus grande augmentation de E, on déplace le sommet d'une quantité $\alpha_0$ dans la direction opposée, et le sommet $S_0$ a pour nouvelle position

$$q_1 = q_{S_0} - \alpha_0 * \frac{\nabla E(q_{S_0})}{\left|\nabla E(q_{S_0})\right|}$$

La procédure ainsi répétée engendre les positions intermédiaires $q_2$, $q_3$,....$q_k$ telles que

$$q_{k+1} = q_k - \alpha_k * \frac{\nabla E(q_k)}{\left|\nabla E(q_k)\right|}$$

On choisit avantageusement un pas $\alpha_k$ adaptatif de manière à accélérer la convergence. La méthode de descente de gradient à pas adaptatif consiste à diminuer (resp. augmenter) le pas $\alpha_k$ lorsque l'écart E augmente (resp. diminue) tout en respectant une contrainte de taille sur le pas visant à ce que $\alpha_k \in [\alpha_{min}, \alpha_{max}]$ La position finale $q_n = q_{S_0}$ est obtenue lorsque la différence entre deux écarts E successifs est inférieur à un écart seuil minimal. On calcule de façon analogue la position optimale des autres sommets du maillage.

Comme on l'a vu précédemment, l'écart E est calculée par rapport à l'image réelle. Selon une version améliorée, l'écart E est calculée à chaque niveau de maillage par rapport à une image de référence I spécifique présentant des similarités en terme de contenu fréquentiel avec le niveau de matllage considéré. Ainsi, le maillage de base (niveau 0) ne représentant que l'aspect basse fréquence d'une image, l'image de référence utilisée pour l'optimisation de position des sommets de ce niveau de maillage possède également un contenu fréquentiel basse fréquence. Cette image de référence est obtenue par filtrage de l'image réelle.

De façon analogue, on associe à chaque niveau de maillage une image de référence dont le contenu fréquentiel est adapté au maillage considéré. L'image de référence associé au niveau de maillage la plus élevé correspond à l'image réelle (sans filtrage). Pour générer ces images de référence, on utilise une approximation des filtres passe-bas demi-bande de réponse impulsionnelle infinie

$$h(n) = \frac{\sin(\pi n/L)}{\pi n/L} \ ,$$

L étant un facteur de sous-échantillonnage.

On utilise ainsi une image de référence différente à chaque niveau de maillage pour calculer la valeur E.

L'optimisation des valeurs de luminance et de chrominance associées aux sommets de maillage constitue un autre perfectionnement possible du procédé de l'invention.

L'optimisation des valeurs Y,U,V est réalisée via une méthode des moindres carrés, et consiste à minimiser un critère E' défini sur le domaine de l'image $\Omega$ de la manière suivante:

$$E' = \int_{\Omega} \left| I(x,y) - \sum_{n=1}^{M} \psi_{S_n}(x,y).v(S_n) \right|^2 dxdy$$

où

- $S_n$ est un sommet d'indice n du maillage multiple,
- M est le nombre total de sommets du maillage multiple,
- $I(x,y)$ représente la valeur de luminance (resp. la valeur de chrominance U ou V) du pixel de coordonnées $(x,y)$ de l'image à coder,
- $\psi_{S_n}$ est la fonction d'interpolation associée au sommet $S_n$,
- $v(S_n)$ est la valeur optimisée de luminance (resp. de chrominance) associée au sommet $S_n$.

Si on dérive cette expression, on obtient les valeurs optimisées en résolvant le système linéaire de M équations suivant :

$$\begin{cases} \sum_{n=1}^{M}\left(\int_{\Omega}\psi_{S_1}(x,y)\cdot\psi_{S_n}(x,y)\cdot dxdy\right)\cdot v(S_1)=\int_{\Omega}I(x,y)\cdot\psi_{S_1}(x,y)\cdot dxdy \\ \qquad\qquad\qquad\qquad\vdots \\ \sum_{n=1}^{M}\left(\int_{\Omega}\psi_{S_m}(x,y)\cdot\psi_{S_n}(x,y)\cdot dxdy\right)\cdot v(S_m)=\int_{\Omega}I(x,y)\cdot\psi_{S_m}(x,y)\cdot dxdy \\ \qquad\qquad\qquad\qquad\vdots \end{cases}$$

Grâce au support compact des fonctions $\psi_{S_m}$, ce système d'équations peut également s'exprimer de la manière suivante:

$$\begin{cases} \sum_{e\in sup\,p(S_1)}\sum_{(x,y)\in e}\sum_{S_k\in ver(e)}\psi_{S_1}(x,y)\cdot\psi_{S_k}(x,y)\cdot v(S_1)=\sum_{e\in sup\,p(S_1)}\sum_{(x,y)\in e}I(x,y)\cdot\psi_{S_1}(x,y) \\ \qquad\qquad\qquad\qquad\vdots \\ \sum_{e\in sup\,p(S_m)}\sum_{(x,y)\in e}\sum_{S_k\in ver(e)}\psi_{S_m}(x,y)\cdot\psi_{S_k}(x,y)\cdot v(S_m)=\sum_{e\in sup\,p(S_m)}\sum_{(x,y)\in e}I(x,y)\cdot\psi_{S_m}(x,y) \\ \qquad\qquad\qquad\qquad\vdots \end{cases} \qquad (1)$$

ou

- supp($S_m$) désigne les triangles ou mailles ayant pour sommet le sommet $S_m$, et
- ver(e) désigne les sommets du triangle e.

Résoudre le système d'équations précédent équivaut à résoudre un système matriciel du type:

$$AX=B$$

où

- A est une matrice symétrique définie positive,
- X est la matrice colonne des valeurs optimisées $v(S_m)$ avec $m\in[1..M]$, et
- B est une matrice colonne des valeurs du terme de droite du système (1).

La matrice A étant une matrice symétrique définie positive, elle possède une factorisation $A=LDL^T$ unique, L désignant une matrice triangulaire inférieure à diagonale unité et D une matrice diagonale dont tous les coefficients diagonaux sont strictement positifs. Le conditionnement de la matrice A avoisine par ailleurs la valeur unité.
La détermination des coefficients de L et D peut se faire par identification des coefficients situés dans la partie triangulaire inférieure des matrices:

$$A_{i,j}=\sum_{k=1..M}L_{i,k}\cdot D_k\cdot L_{j,k}=\sum_{k=1..j}L_{i,k}\cdot D_k\cdot L_{j,k}\quad pour\ j\le i$$

Par ailleurs, on a:

$$L_{i,j} = (A_{i,j} - (\sum_{k=1..j-1} L_{i,k} * D_k * L_{j,k}) / D_j) \text{ pour } 1 \le j \le i$$

$$D_j = A_{i,j} - \sum_{k=1..i-1} L_{i,k}^2 * D_k$$

Les termes de la matrice X des valeurs optimisées sont alors déterminées par la formule:

$$X_i = B_i - \sum_{j=1..i-1} X_j * L_{i,j}$$

Selon un mode de réalisation améliorée, on pourra prévoir d'utiliser la technique profil pour résoudre le système AX=B de manière à limiter la taille mémoire lors de la factorisation de A. La technique profil remplace la représentation classique d'une matrice sous forme d'un tableau M X M par une représentation sous la forme de deux vecteurs. En effet, la matrice A étant creuse (elle comporte beaucoup de zéros), sa représentation sous forme classique n'est pas adéquate.

ANNEXE 3

Cette opération d'inversion de diagonale ne concerne que les quadrilatères convexes. La figure 6A illustre un exemple de quadrilatère non convexe pour lequel l'opération d'inversion de diagonale n'est pas autorisée.
Une opération d'inversion de diagonale sur un quadrilatère convexe Q formé de deux triangles T1 et T2 est illustrée figure 6B. Cette opération consiste à inverser la diagonale représentant l'arête commune aux deux triangles T1 et T2. Le quadrilatère Q comprend alors après inversion deux nouveaux triangles T'1 et T'2.
L'opération d'optimisation de la topologie comporte alors les étapes suivantes:

- on calcule l'écart de luminance E sur chaque quadrilatère convexe Q formé de deux triangles adjacents T1, T2 du niveau de maillage le plus élevé, cet écart de luminance étant égal à la somme des sommes des écart de luminance de T1 et T2, E(Q)= E(T1)+E(T2),
- on inverse la diagonale représentant l'arête commune aux deux triangles T1 et T2 de manière à former deux nouveaux triangles T'1 et T'2,,
- on calcule l'écart de luminance des nouveaux triangles T'1 et T'2 et on les additionne E(Q)=E(T'1)+E(T'2), et
- on conserve dans le maillage les deux triangles dont la somme des écarts de luminance est la plus faible.

**Revendications**

1. Procédé de codage d'une image à coder, qui comprend les étapes :

   - définition d'un maillage hiérarchique présentant au moins deux niveaux de maillage emboîtés formés de mailles définies par des sommets ;
   - détermination, pour chacune desdites mailles, d'une information d'erreur entre ladite image à coder et une image interpolée obtenue à partir des sommets des mailles appartenant au niveau de maillage de la maille considérée ;
   - arrêt (33) du raffinement des mailles présentant une information d'erreur inférieure à un premier seuil prédéterminé ;

   **caractérisé en ce qu'**il comprend également les étapes suivantes :

   - mise en oeuvre d'un codage spécifique (35) pour les mailles présentant une information d'erreur supérieure à un second seuil prédéterminé ;
   - continuation (34) du raffinement des mailles présentant une information d'erreur supérieure audit premier seuil prédéterminé et inférieure audit second seuil prédéterminé.

2. Procédé de codage selon la revendication 1. **caractérisé en ce que** ledit codage spécifique met en oeuvre au moins une transformation réversible (72, 74).

3. Procédé de codage selon l'une quelconque des revendications 1 et 2, **caractérisé en ce que** lesdites mailles sont des triangles (81).

4. Procédé de codage selon les revendications 2 et 3, **caractérisé en ce que** ledit codage spécifique comprend les étapes suivantes :

    - association à chacun desdits triangles à coder (81) d'une matrice carrée (84) représentative dudit triangle à coder, à l'aide d'une première transformation réversible (72) ;
    - application d'une seconde transformation réversible (74) de décorrélation sur chacune desdites matrices carrées (84), délivrant des matrices transformées.

5. Procédé de codage selon la revendication 4, **caractérisé en ce que** ladite étape d'association d'une matrice carrée comprend les étapes suivantes :

    - transformation affine (82) d'un triangle source (81) en un triangle rectangle (83) isocèle, appelé triangle de référence ;
    - création (86) d'une matrice carrée (84) dont la partie inférieure comprend les données représentatives dudit triangle rectangle isocèle ;
    - symétrisation (85) de ladite matrice carrée.

6. Procédé de codage selon l'une quelconque des revendications 2 à 5, **caractérisé en ce que** ladite seconde transformation (74) appartient au groupe comprenant :

    - la transformation de Karhunen Loève (KLT) ;
    - la transformation de Fourier discrète (DFT) ;
    - la transformation en cosinus discrète (DCT) ;
    - la transformation de Walsh-Hadamard (WHT).

7. Procédé de codage selon l'une quelconque des revendications 1 à 6, **caractérisé en ce que** ledit codage spécifique comprend une étape de quantification (75) et de codage des données de la partie inférieure de ladite matrice transformée.

8. Procédé de codage (76) selon l'une quelconque des revendications 1 à 7, **caractérisé en ce qu'**au moins un des paramètres suivants est modifiable :

    - ledit premier seuil ;
    - ledit second seuil ;
    - la structure dudit maillage emboîté ;
    - un facteur d'échelle $\alpha$ permettant une expansion ou une compression de ladite matrice carrée dans le domaine spatial ;
    - le type de quantification ;
    - le pas de quantification.

9. Procédé de codage selon l'une quelconque des revendications 1 à 8, **caractérisé en ce que** ladite information d'erreur correspond à un écart de luminance, représentent une erreur quadratique ou une erreur absolue entre un triangle source et le triangle approximé correspondant.

10. Procédé de codage selon l'une quelconque des revendications 1 à 9, **caractérisé en ce que**, pour chaque maille, on effectue le choix suivant :

    - si ladite information d'erreur est inférieure audit premier seuil, on interrompt (132) la division hiérarchique pour la maille considérée ;
    - si ladite information d'erreur est supérieure audit premier seuil, mais inférieur audit second seuil, on continue à appliquer ladite division hiérarchique (134) ;

- si ledit écart de luminance est supérieur audit second seuil, on met en oeuvre ledit codage spécifique (135).

11. Procédé de codage selon l'une quelconque des revendications 1 à 10, **caractérisé en ce que**, pour tous les niveaux de maillage autres que le premier niveau, les données prises en compte pour le codage sont des valeurs différentielles quantifiées correspondant chacune à la différence quantifiée entre une valeur optimisée pour le niveau hiérarchique considéré de l'image à coder et une valeur interpolée à partir du maillage du niveau hiérarchique inférieur.

12. Procédé de codage selon l'une quelconque des revendications 1 à 11, **caractérisé en ce qu'**il comprend une étape d'optimisation de la position des sommets de chacun desdits maillages. minimisant un critère d'erreur prédéterminé.

13. Procédé de codage selon l'une quelconque des revendications 1 à 12, **caractérisé en ce qu'**il comprend une étape de définition d'un arbre quaternaire de subdivision, permettant d'identifier les mailles utilisant ledit codage spécifique et les mailles dont le contenu est interpolé à partir des valeurs aux noeuds définissant lesdites mailles.

14. Procédé de codage selon l'une quelconque des revendications 1 à 13, **caractérisé en ce qu'**il comprend une étape d'adaptation dudit maillage avec contenu de l'image, mettant en oeuvre des inversions des diagonales des quadrilatères composés par tous les couples de triangles adjacents.

15. Procédé de décodage d'une image codée selon un procédé de codage comprenant les étapes suivantes :

- définition d'un maillage hiérarchique présentant au moins deux niveaux de maillage emboîtés formés de mailles définies par des sommets ;
- détermination, pour chacune desdites mailles, d'une information d'erreur entre ladite image à coder et une image interpolée obtenue à partir des sommets des mailles appartenant au niveau de maillage de la maille considérée ;
- arrêt du raffinement des mailles présentant une information d'erreur inférieure à un premier seuil prédéterminé ;
- mise en oeuvre d'un codage spécifique pour les mailles présentant une information d'erreur supérieure à un second seuil prédéterminé ;
- continuation du raffinement des mailles présentant une information d'erreur supérieure audit premier seuil prédéterminé et inférieure audit second seuil prédéterminé ;

**caractérisé en ce qu'**il comprend les étapes suivantes :

- décodage préalable desdites données codées selon ledit codage mettant en oeuvre maillage hiérarchique, permettant la description d'une représentation initiale ;
- décodage complémentaire desdites données codées à l'aide dudit codage spécifique, permettant d'affiner ladite représentation initiale.

16. Procédé de décodage selon la revendication 15, **caractérisé en ce que** ladite étape de décodage complémentaire est optionnelle.

17. Procédé de décodage selon l'une quelconque des revendications 15 et 16, **caractérisé en ce que**, ledit codage spécifique comprenant les étapes suivantes :

- association à chacun desdits triangles source à traiter d'une matrice carrée représentative dudit triangle source, à l'aide d'une première transformation réversible ;
- application d'une seconde transformation réversible de décorrélation sur chacune desdites matrices carrées, délivrant des matrices transformées,

**caractérisé en ce que** ledit décodage complémentaire comprend les étapes suivantes de reconstruction :

a) application d'une transformation inverse à ladite seconde transformation réversible de décorrélation sur lesdites matrices transformées, délivrant lesdites matrices carrées reconstruites ;
b) association à chacune desdites matrices carrées reconstruites d'un triangle reconstruit correspondant, à l'aide d'une transformation affine inverse de ladite première transformation réversible ;

c) reconstruction de ladite partition minimale, à partir desdits triangles reconstruits.

18. Procédé de décodage selon la revendication 17, **caractérisé en ce que** lesdites matrices carrées sont recréées à partir des données d'un train binaire reçu, dont les données décodées sont les coefficients du triangle à reconstruire, qui forment la partie inférieure de ladite matrice.

19. Procédé de décodage selon l'une quelconque des revendications 15 à 18, **caractérisé en ce que** ledit décodage préalable assure la lecture, dans le train binaire reçu, d'au moins une des informations appartenant au groupe comprenant :

- le nombre de niveaux de la hiérarchie :
- l'identification de la technique de codage utilisée pour chacun des triangles ;
- la succession des valeurs différentielles des composantes associées aux noeuds dudit maillage hiérarchique ;
- l'identification des arcs sur lesquels une inversion de diagonale est réalisée.

**Patentansprüche**

1. Kodierungsverfahren eines zu kodierenden Bildes, das die folgenden Schritte umfasst:

- Definition einer hierarchischen Vernetzung, die mindestens zwei verschachtelte Vernetzungsebenen aufweist, welche von durch Knoten definierte Maschen gebildet werden;
- Bestimmung für jede Masche einer Fehlerinformation zwischen dem zu kodierenden Bild und einem interpolierten Bild, das aus den Knoten von Maschen erhalten wird, die der Vernetzungsebene der betrachteten Masche angehören;
- Anhalten (33) der Verfeinerung von Maschen, die eine unterhalb eines vorgegebenen ersten Schwellenwertes liegende Fehlerinformation aufweisen,

**dadurch gekennzeichnet, dass** es ebenfalls die folgenden Schritte umfasst:

- Einsatz einer für die Maschen, welche eine oberhalb eines vorgegebenen zweiten Schwellenwertes liegenden Fehlerinformation aufweisen, spezifischen Kodierung (35);
- Fortführung (34) der Verfeinerung der Maschen, die eine oberhalb des vorgegebenen ersten Schwellenwertes und unterhalb des vorgegebenen zweiten Schwellenwertes liegende Fehlerinformation aufweisen.

2. Kodierungsverfahren nach Anspruch 1, **dadurch gekennzeichnet, dass** die spezifische Kodierung mindestens eine umkehrbare Transformation (72, 74) einsetzt.

3. Kodierungsverfahren nach einem der Ansprüche 1 oder 2, **dadurch gekennzeichnet, dass** es sich bei den Maschen um Dreiecke (81) handelt.

4. Kodierungsverfahren nach den Ansprüchen 2 und 3, **dadurch gekennzeichnet, dass** die spezifische Kodierung die folgenden Schritte umfasst:

- Assoziierung einer für das zu kodierende Dreieck repräsentativen quadratischen Matrix (84) zu jedem dieser zu kodierenden Dreiecke (81) mit Hilfe einer ersten umkehrbaren Transformation (72);
- Anwendung einer zweiten umkehrbaren Dekorrelierungstransformation (74) auf jede der quadratischen Matrizen (84), wobei transformierte Matrizen entstehen.

5. Kodierungsverfahren nach Anspruch 4, **dadurch gekennzeichnet, dass** der Assoziierungsschritt einer quadratischen Matrix die folgenden Schritte umfasst:

- Verfeinerungstransformation (82) eines Quellendreiecks (81) in ein Referenzdreieck genanntes, gleichschenkliges rechtwinkliges Dreieck (83);
- Erzeugung (86) einer quadratischen Matrix, deren unterer Teil die repräsentativen Daten des gleichschenkligen rechtwinkligen Dreiecks umfasst;
- Symmetrisierung (85) der quadratischen Matrix.

**6.** Kodierungsverfahren nach einem der Ansprüche 2 bis 5, **dadurch gekennzeichnet, dass** die zweite Transformation (74) der die folgenden Transformationen umfassenden Gruppe angehört:

- die Karhunen-Loève-Transformation (KLT);
- die diskrete Fourier-Transformation (DFT);
- die diskrete Cosinus-Transformation (DCT);
- die Walsh-Hadamard-Transformation (WHT).

**7.** Kodierungsverfahren nach einem der Ansprüche 1 bis 6, **dadurch gekennzeichnet, dass** die spezifische Kodierung einen Schritt zum Quantifizieren (75) und zum Kodieren der Daten des unteren Teils der transformierten Matrix umfasst.

**8.** Kodierungsverfahren (76) nach einem der Ansprüche 1 bis 7, **dadurch gekennzeichnet, dass** mindestens einer der folgenden Parameter geändert werden kann:

- der erste Schwellenwert;
- der zweite Schwellenwert;
- die Struktur der verschachtelten Vernetzung;
- ein Skalenfaktor $\alpha$, der das Dehnen oder das Zusammendrücken der quadratischen Matrix im räumlichen Bereich ermöglicht;
- die Quantifizierungsart;
- der Quantifizierungsschritt.

**9.** Kodierungsverfahren nach einem der Ansprüche 1 bis 8, **dadurch gekennzeichnet, dass** die Fehlerinformation einer Luminanzabweichung entspricht, die einen quadratischen Fehler oder einen Absolutfehler zwischen einem Quellendreieck und dem entsprechenden angenäherten Dreieck darstellen.

**10.** Kodierungsverfahren nach einem der Ansprüche 1 bis 9, **dadurch gekennzeichnet, dass** für jede Masche die folgende Wahl getroffen wird:

- wenn die Fehlerinformation unterhalb des ersten Schwellenwertes liegt, so wird die hierarchische Division für die betrachtete Masche unterbrochen (132);
- wenn die Fehlerinformation oberhalb des ersten aber unterhalb des zweiten Schwellenwertes liegt, so wird die hierarchische Division weitergeführt (134);
- wenn die Luminanzabweichung oberhalb des zweiten Schwellenwertes liegt, so wird die spezifische Kodierung angewandt (135).

**11.** Kodierungsverfahren nach einem der Ansprüche 1 bis 10, **dadurch gekennzeichnet, dass** für alle anderen Vernetzungsebenen außer der ersten, die für das Kodieren berücksichtigten Daten quantifizierte Differentialwerte sind, die jeweils der quantifizierten Differenz zwischen einem für den für die betrachtete hierarchische Ebene des zu kodierenden Bildes optimierten Wert und einem ausgehend von der Vernetzung der darunter liegenden hierarchischen Ebene interpolierten Wert entsprechen.

**12.** Kodierungsverfahren nach einem der Ansprüche 1 bis 11, **dadurch gekennzeichnet, dass** es einen Optimierungsschritt der Position der Knoten einer jeden der Vernetzungen umfasst, der ein vorgegebenes Fehlerkriterium minimiert.

**13.** Kodierungsverfahren nach einem der Ansprüche 1 bis 12, **dadurch gekennzeichnet, dass** es einen Definitionsschritt eines quaternären Unterteilungsbaumes umfasst, der das identifizieren der die spezifische Kodierung verwendenden Maschen sowie der Maschen ermöglicht, deren Inhalt ausgehend von den diese Maschen definierenden Knoten interpoliert wird.

**14.** Kodierungsverfahren nach einem der Ansprüche 1 bis 13, **dadurch gekennzeichnet, dass** es einen Anpassungsschritt der Vernetzung mit dem Bildinhalt umfasst, wobei Umkehrungen der Diagonalen der von allen nebeneinander liegenden Dreieckspaare gebildeten Rechtecke eingesetzt werden.

**15.** Dekodierungsverfahren eines Bildes, welches nach einem die folgenden Schritte umfassenden Verfahren kodiert wurde:

- Definition einer hierarchischen Vernetzung, die mindestens zwei verschachtelte Vernetzungsebenen aufweist, welche von durch Knoten definierten Maschen gebildet werden;
- Bestimmung für jede Masche einer Fehlerinformation zwischen dem zu kodierenden Bild und einem interpolierten Bild, das aus den Knoten von Maschen erhalten wird, die der Vernetzungsebene der betrachteten Masche angehören;
- Anhalten der Verfeinerung von Maschen, die eine unterhalb eines vorgegebenen ersten Schwellenwertes liegende Fehlerinformation aufweisen,
- Einsatz einer für die Maschen, welche eine oberhalb eines vorgegebenen zweiten Schwellenwertes liegende Fehlerinformation aufweisen, spezifischen Kodierung;
- Fortführung der Verfeinerung der Maschen, die eine oberhalb des vorgegebenen ersten Schwellenwertes und unterhalb des vorgegebenen zweiten Schwellenwertes liegende Fehlerinformation aufweisen;

**dadurch gekennzeichnet, dass** es die folgenden Schritte umfasst:

- vorhergehendes Dekodieren der nach dem die hierarchische Vernetzung anwendenden Verfahren kodierten Daten, welche die Beschreibung einer Ausgangsdarstellung ermöglicht;
- zusätzliches Dekodieren der mit Hilfe der spezifischen Kodierung kodierten Daten, welches die Verfeinerung der Ausgangsdarstellung ermöglicht.

16. Dekodierungsverfahren nach Anspruch 15, **dadurch gekennzeichnet, dass** der zusätzliche Dekodierungsschritt optional ist.

17. Dekodierungsverfahren nach einem der Ansprüche 15 oder 16, **dadurch gekennzeichnet, dass** die spezifische Kodierung die folgenden Schritte aufweist:

- Assoziierung einer für jedes der zu verarbeitenden Quellendreiecke repräsentativen quadratischen Matrix zu jedem dieser Quellendreiecke, mit Hilfe einer ersten umkehrbaren Transformation;
- Anwendung einer zweiten umkehrbaren Dekorrelierungstransformation auf jede der quadratischen Matrizen, wobei transformierte Matrizen entstehen,

**dadurch gekennzeichnet, dass** die zweite Zusatzdekodierung die folgenden Wiederherstellungsschritte umfasst:

a) Anwendung einer Umkehrtransformation auf die zweite umkehrbare Dekorrerlierungstransformation auf die transformierten Matrizen, wobei die wiederhergestellten quadratischen Matrizen erzeugt werden;
b) Assoziieren eines entsprechenden wiederhergestellten Dreiecks zu einer jeden wiederhergestellten Matrix, mit Hilfe einer affinen Umkehrtransformation der ersten umkehrbaren Transformation;
c) Wiederherstellung der erwähnten Minimalaufteilung, ausgehend von den wiederhergestellten Dreiecken.

18. Dekodierungsverfahren nach Anspruch 17, **dadurch gekennzeichnet, dass** die quadratischen Matrizen ausgehend von den Daten eines empfangenen Binärzuges wiederhergestellt werden, wobei die dekodierten Daten dieses Binärzuges die Koeffizienten des wiederherzustellenden Dreiecks sind, welche den unteren Teil der Matrix bilden.

19. Dekodierungsverfahren nach einem der Ansprüche 15 bis 18, **dadurch gekennzeichnet, dass** die vorhergehende Dekodierung das Lesen in dem empfangenen Binärzug von mindestens einer der Informationen aus der Gruppe sicherstellt, die folgendes umfassen:

- die Zahl der Ebenen der Hierarchie;
- die Identifizierung der für jedes Dreieck verwendeten Kodiertechnik;
- die Reihenfolge der Differentialwerte der mit den Knoten der besagten hierarchischen Vernetzung assoziierten Komponenten;
- die Identifizierung der Bögen, über welche eine Umkehrung der Diagonalen erfolgt.

**Claims**

1. A method for encoding an image to be encoded, said method comprising the following steps:

- definition of a hierarchical meshwork having at least two nested meshwork levels formed by meshes defined by vertices;
- determination, for each of said meshes, of an item of information representing the error between said image to be encoded and an interpolated image obtained from the vertices of the meshes pertaining to the meshwork level of the mesh under consideration;
- stopping (33) the refinement of the meshes having an item of error information below a predetermined first threshold,

**characterised in that** said method also comprises the following steps:

- implementation of a specific encoding (35) for the meshes having an item of error information above a predetermined second threshold;
- continuation (34) of the refinement of the meshes having an item of error information above said predetermined first threshold and below said predetermined second threshold.

2. Encoding method according to Claim 1, **characterised in that** said specific encoding implements at least one reversible transformation (72, 74).

3. Encoding method according to any one of Claims 1 and 2, **characterised in that** said meshes are triangles (81).

4. Encoding method according to Claims 2 and 3, **characterised in that** said specific encoding comprises the following steps:

- association, with each of said triangles (81) to be encoded, of a square matrix (84) that is representative of said triangle to be encoded, with the aid of a first reversible transformation (72);
- application of a second reversible decorrelation transformation (74) to each of said square matrices (84), yielding transformed matrices.

5. Encoding method according to Claim 4, **characterised in that** said step of association of a square matrix comprises the following steps:

- affine transformation (82) of a source triangle (81) into an isosceles right-angled triangle (83), called the reference triangle;
- creation (86) of a square matrix (84), the lower part of which comprises data that are representative of said isosceles right-angled triangle;
- symmetrisation (85) of said square matrix.

6. Encoding method according to any one of Claims 2 to 5, **characterised in that** said second transformation (74) pertains to the group comprising:

- the Karhunen Loève transformation (KLT);
- the discrete Fourier transformation (DFT);
- the discrete cosine transformation (DCT);
- and the Walsh-Hadamard transformation (WHT).

7. Encoding method according to any one of Claims 1 to 6, **characterised in that** said specific encoding comprises a step of quantisation (75) and encoding of the data of the lower part of said transformed matrix.

8. Encoding method (76) according to any one of Claims 1 to 7, **characterised in that** at least one of the following parameters is modifiable:

- said first threshold;
- said second threshold;
- the structure of said nested meshwork;
- a scale factor $\alpha$ enabling an expansion or a compression of said square matrix in the space-domain;
- the quantisation type;
- the quantisation step.

9. Encoding method according to any one of Claims 1 to 8, **characterised in that** said item of error information corresponds to a difference in luminance representing a mean square error or an absolute error between a source triangle and the corresponding approximated triangle.

10. Encoding method according to any one of Claims 1 to 9, **characterised in that** the following choice is made for each mesh:

   - if said item of error information is below said first threshold, the hierarchical division for the mesh under consideration is interrupted (132);
   - if said item of error information is above said first threshold but below said second threshold, the application of said hierarchical division (134) is continued;
   - if said difference in luminance is above said second threshold, said specific encoding (135) is implemented.

11. Encoding method according to any one of Claims 1 to 10, **characterised in that**, for all the meshwork levels other than the first level, the data taken into account for the encoding are quantised differential values each corresponding to the quantised difference between an optimised value for the hierarchical level under consideration of the image to be encoded and a value interpolated from the meshwork of the lower hierarchical level.

12. Encoding method according to any one of Claims 1 to 11, **characterised in that** it comprises a step of optimisation of the position of the vertices of each of said meshworks, minimising a predetermined error criterion.

13. Encoding method according to any one of Claims 1 to 12, **characterised in that** it comprises a step of definition of a quaternary subdivision tree, enabling identification of the meshes using said specific encoding and of the meshes having contents interpolated from the values at the nodes defining said meshes.

14. Encoding method according to any one of Claims 1 to 13, **characterised in that** it comprises a step of matching said mesh with the content of the image, implementing inversions of the diagonals of the quadrilaterals formed by all the pairs of adjacent triangles.

15. A method for decoding an image encoded in accordance with an encoding method comprising the following steps:

   - definition of a hierarchical meshwork having at least two nested meshwork levels formed by meshes defined by vertices;
   - determination, for each of said meshes, of an item of information representing the error between said image to be encoded and an interpolated image obtained from the vertices of the meshes pertaining to the meshwork level of the meshes under consideration;
   - stopping the refinement of the meshes having an item of error information below a predetermined first threshold;
   - implementation of a specific encoding for the meshes having an item of error information above a predetermined second threshold;
   - continuation of the refinement of the meshes having an item of error information above said predetermined first threshold and below said predetermined second threshold;

   **characterised in that** it comprises the following steps:

   - preliminary decoding of said data encoded in accordance with said encoding, implementing a hierarchical meshwork enabling the description of an initial representation;
   - complementary decoding of said data encoded with the aid of said specific encoding, enabling said initial representation to be refined.

16. Decoding method according to Claim 15, **characterised in that** said complementary decoding step is optional.

17. Decoding method according to any one of Claims 15 and 16, **characterised in that** said specific encoding comprises the following steps:

   - association, with each of said source triangles to be processed, of a square matrix that is representative of said source triangle, with the aid of a first reversible transformation;
   - application of a second reversible decorrelation transformation to each of said square matrices, yielding transformed matrices,

**characterised in that** said complementary decoding comprises the following steps of reconstruction:

a) application of a transformation, inverse to said second reversible decorrelation transformation, to said transformed matrices, yielding said reconstructed square matrices;
b) association, with each of said reconstructed square matrices, of a corresponding reconstructed triangle with the aid of an inverse affine transformation of said first reversible transformation;
c) reconstruction of said minimal partition from said reconstructed triangles.

18. Decoding method according to Claim 17, **characterised in that** said square matrices are recreated from data of a received bit-stream, the decoded data of which are the coefficients of the triangle to be reconstructed, which form the lower part of said matrix.

19. Decoding method according to any one of Claims 15 to 18, **characterised in that** said preliminary decoding provides for the reading, in the received bit-stream, of at least one of the items of information pertaining to the group comprising:

- the number of levels of the hierarchy;
- the identification of the encoding technique used for each of the triangles;
- the succession of the differential values of the components associated with the nodes of said hierarchical meshwork;
- the identification of the arcs on which a diagonal inversion is realised.

Fig. 1A

Fig. 1B

Fig. 2

Fig. 3

Fig. 4

OPTIMISATION

Niveau *n*

PROPAGATION

Niveau *n+1*

OPTIMISATION

· · · · ·

Fig. 5

Q

T1

T'2

T2

T'1

Q

Fig. 6A

Fig. 6B

```
┌─────────────────────────────┐
│  Identification des éléments │ ─── 71
│     triangulaires à coder    │
└─────────────────────────────┘
              │
              ▼
┌─────────────────────────────┐
│  Transformation affine vers  │
│  un triangle rectangle isocèle│ ─── 72
│   par interpolation bilinéaire│
└─────────────────────────────┘
              │
              ▼
┌─────────────────────────────┐
│    Symétrisation en vue      │
│  du remplissage d'une matrice│ ─── 73
│       carré associée         │
└─────────────────────────────┘
              │
              ▼
┌─────────────────────────────┐
│   Transformation par DCT nXn │ ─── 74
└─────────────────────────────┘
              │
              ▼
┌─────────────────────────────┐
│  Quantification de la partie │ ─── 75
│    triangulaire inférieure   │
└─────────────────────────────┘
              │
              ▼
┌─────────────────────────────┐
│   Parcours Zigzag adapté et  │
│     codage entropique        │ ─── 76
│      des coefficients        │
└─────────────────────────────┘
```

<u>Fig. 7</u>

81    82    83    86    85

Symétrisation

84

<u>Fig. 8</u>

Fig. 10

Fig. 11

Fig. 12

81

82

P2

× P(x,y)

P3

P1

Q2(0,1)

83

×
Q(X,Y)

Q1(0,0)          Q3(1,0)

## Fig. 9

131

$E_T < S$

oui

132

Arrêt

non

133

$E_T < k.S$

oui

134

Codage
hiérarchique

non

135

DCT

## Fig. 13